# EUROPEAN PATENT APPLICATION

(11) **EP 4 510 559 A1**
(43) Date of publication of application: **19.02.2025**
(21) Application number: 23829416.9
(22) Date of filing: 17.02.2023
(51) Int. Cl.: H04N 13/349

(54) **DISPLAY METHOD, DEVICE, AND SYSTEM**

(30) Priority: 27.06.2022 CN 202210745069; 26.10.2022 CN 202211316193
(71) Applicant: Huawei Technologies Co., Ltd., Shenzhen, Guangdong 518129 (CN)
(72) Inventor: HAO, Jia, Shenzhen, Guangdong 518129 (CN); YUAN, Le, Shenzhen, Guangdong 518129 (CN); WANG, Peng, Shenzhen, Guangdong 518129 (CN)
(74) Representative: Körber, Martin Hans
(86) International application number: PCT/CN2023/076903
(87) International publication number: WO 2024/001223

(57) **Abstract**

This application relates to the field of image processing technologies, and discloses a display method and system and a device, to provide a technical solution in which audience can obtain global information on a sports field, so as to help determine a game situation in a timely manner and enhance a sense of participation, thereby providing better visual experience for the audience and improving viewing effect. In addition, the method can provide the audience with more information of interest, thereby improving interest. In the method, a display side device receives first data from a capturing side device, and displays a first interface based on the first data, where the first interface includes a preset layer and a radar map superimposed on a specified area of the preset layer, the preset layer is obtained based on a preset viewpoint image of a target scene, and the radar map indicates location information of a plurality of target objects in the target scene.

## Description

### CROSS-REFERENCE TO RELATED APPLICATIONS

This application claims priorities to Chinese Patent Application No. 202210745069.1, filed with the China National Intellectual Property Administration on June 27, 2022 and entitled "DISPLAY METHOD AND TERMINAL DEVICE", and to Chinese Patent Application No. 202211316193.2, filed with the China National Intellectual Property Administration on October 26, 2022 and entitled "DISPLAY METHOD AND SYSTEM AND DEVICE", both of which are incorporated herein by reference in their entireties.

### TECHNICAL FIELD

Embodiments of this application relate to the field of image processing technologies, and in particular, to a display method and system and a device.

### BACKGROUND

A video assistant referee (video assistant referee, VAR) technology mainly uses a plurality of cameras on a sports field to image a three-dimensional scene, and then restores a sphere line model in a computer in a short-distance and real-time manner, to help determine a penalty. This technology captures every small action of a player on the sports field from a plurality of camera locations and angles. When a disputable penalty occurs on the sports field or a referee needs to acquire a game video, a technician needs to manually perform the foregoing operation and uses a video playback technology to help the referee make a correct penalty decision. Therefore, using the VAR technology in a scene such as a sports game venue or a stage not only needs a manual operation of the technician, but also affects an ongoing game process, resulting in a specific use limitation.

### SUMMARY

Embodiments of this application provide a display method and system and a device, to provide a technical solution in which audience can obtain global information on a sports field, so as to help determine a game situation in a timely manner and enhance a sense of participation, thereby providing better visual experience for the audience and improving viewing effect. In addition, the method can provide the audience with more information of interest, thereby improving interest.

According to a first aspect, an embodiment of this application provides a display method. The method may be applied to a display side device and includes: receiving first data from a capturing side device, and displaying a first interface based on the first data, where the first interface includes a preset layer and a radar map superimposed on a specified area of the preset layer, the preset layer is obtained based on a preset viewpoint image of a target scene, and the radar map indicates location information of a plurality of target objects in the target scene.

In the method, the radar map used to display global information is generated based on a free viewpoint image, the preset layer used to display local information of a viewpoint is obtained based on the free viewpoint image, and the radar map is superimposed on the preset layer and then displayed to a user. In this way, the user can view partial display content of the target scene from the preset layer, and can further obtain global information of the target scene from the radar map. This can improve a sense of participation, and enhance viewing experience and viewing effect of the user.

In a possible design, the first data includes encoded data used to display the preset layer and encoded data used to display the radar map; and the displaying a first interface based on the first data may be implemented as displaying, on the specified area of the preset layer obtained through decoding, the radar map obtained through decoding.

In this design, the radar map may be generated on a side of the capturing side device, so that a calculation amount on a side of the display side device can be reduced, and a requirement on a computing capability of the display side device can be reduced.

In a possible design, the first data includes encoded data used to display the preset layer and the location information of the plurality of target objects; and the displaying a first interface based on the first data may be implemented as: generating the radar map based on the location information of the plurality of target objects; and displaying the generated radar map in the specified area of the preset layer obtained through decoding.

In this design, the capturing side device and the display side device may further jointly generate the radar map, so that calculation amounts of the capturing side device and the display side device can be balanced, and requirements on computing capabilities of the capturing side device and the display side device can be balanced.

In a possible design, the first data further includes personalized information corresponding to at least one specified target object. Based on this, the method further includes: detecting a first user operation on the first interface, where the first user operation indicates to obtain personalized information of a first target object, and the first target object is any one of the at least one specified target object; and displaying a second interface in response to the first user operation, where the second interface includes the personalized information of the first target object.

In this design, the personalized information is associated with the target object, so that more information of interest can be provided for the user, and interaction and a sense of participation of the user in the target scene can be enhanced, thereby improving viewing interest of the user.

In a possible design, the method further includes: obtaining, from a preset database, the personalized information corresponding to the at least one specified target object; and associating the personalized information of the at least one specified target object with a corresponding specified target object in the radar map.

In this design, the display side device may further obtain personalized information of each specified target object from a network or a preconfigured database, and associate corresponding personalized information with each specified target object, so that more information of interest can be provided for the user, and interaction and a sense of participation of the user in the target scene can be enhanced, thereby improving viewing interest of the user.

In a possible design, if the target scene is a game scene, and the specified target object is an athlete, the personalized information corresponding to the specified target object includes but is not limited to one or a combination of the following information: information about the athlete, game information about the athlete, and game information about a team to which the athlete belongs.

In this design, personalized information about the athlete in the game scene is provided for a user, so that the user can better understand a game situation, and viewing experience can be better.

In a possible design, that the preset layer is obtained based on the preset viewpoint image of the target scene includes but is not limited to the following manners:
Manner 1: The preset layer is obtained based on a first single viewpoint image, where the first single viewpoint image is any one of a plurality of free viewpoint images captured by the capturing side device.
Manner 2: The preset layer is a multi-viewpoint stitched picture obtained by stitching based on a plurality of free viewpoint images.
Manner 3: The preset layer is a second single viewpoint image generated based on a plurality of free viewpoint images and a target virtual viewpoint.

In this design, specific content of partial display content may be provided for a user based on a service scenario requirement, so that the user better learns of the target scene with reference to a free viewpoint image displayed at the preset layer and global information displayed in the radar map.

In a possible design, the method further includes: detecting a second user operation on the first interface, where the second user operation indicates to disable displaying of the radar map or hide displaying of the radar map; and displaying a third interface in response to the second user operation, where the third interface includes the preset layer.

In this design, a selective option of displaying the radar map at the preset layer is configured, so that a user can view more scenarios. In this way, the user learns of the target scene with reference to the radar map and the preset layer, or may pay more attention to display content at the preset layer, to avoid impact of the radar map on viewing of the preset layer.

According to a second aspect, an embodiment of this application further provides a display method. The method may be applied to a capturing side device, and includes: capturing at least one free viewpoint image; obtaining first data based on the at least one free viewpoint image; and sending the first data to a display side device, where the first data is used by the display side device to display a first interface, the first interface includes a preset layer and a radar map superimposed on a specified area of the preset layer, the preset layer is obtained based on a preset viewpoint image of a target scene, and the radar map indicates location information of a plurality of target objects in the target scene.

In a possible design, the obtaining first data based on the at least one free viewpoint image includes: obtaining depth information of the target scene based on the at least one free viewpoint image; identifying a target object in the target scene based on the at least one free viewpoint image, and determining a feature identifier of the target object; determining the location information of the plurality of target objects in the target scene based on the depth information of the target scene; generating the radar map based on the feature identifier of the target object and the location information of the plurality of target objects; and obtaining the first data based on encoded data that is obtained through encoding based on the at least one free viewpoint image and that is used to display the preset layer and encoded data that is obtained through encoding based on the radar map and that is used to display the radar map.

In another possible design, the obtaining first data based on the at least one free viewpoint image includes: obtaining depth information of the target scene based on the at least one free viewpoint image; determining the location information of the plurality of target objects in the target scene based on the depth information of the target scene; and obtaining the first data based on the location information of the plurality of target objects and encoded data that is obtained through encoding based on the at least one free viewpoint image and that is used to display the preset layer.

In a possible design, before the obtaining the first data, the method further includes: obtaining, from a preset database, the personalized information corresponding to the at least one specified target object; and the obtaining the first data further includes: obtaining the first data based on the personalized information corresponding to the at least one specified target object.

In a possible design, if the target scene is a game scene, and the specified target object is an athlete, the personalized information corresponding to the specified target object includes but is limited to one or a combination of the following information: information about the athlete, game information about the athlete, and game information about a team to which the athlete belongs.

In a possible design, that the preset layer is obtained based on the preset viewpoint image of the target scene includes: The preset layer is obtained based on a first single viewpoint image, where the first single viewpoint image is any one of a plurality of free viewpoint images captured by the capturing side device; the preset layer is a multi-viewpoint stitched picture obtained by stitching based on a plurality of free viewpoint images; or the preset layer is a second single viewpoint image generated based on a plurality of free viewpoint images and a target virtual viewpoint.

According to a third aspect, an embodiment of this application further provides a display system. The system includes at least one display side device and a capturing side device.

The capturing side device is configured to capture at least one free viewpoint image.

The capturing side device is further configured to obtain first data based on the at least one free viewpoint image.

The capturing side device is further configured to send the first data to a display side device.

The display side device is configured to display a first interface based on the first data.

The first interface includes a preset layer and a radar map superimposed on a specified area of the preset layer, the preset layer is obtained based on a preset viewpoint image of a target scene, and the radar map indicates location information of a plurality of target objects in the target scene.

In a possible implementation, the radar map may be generated on a side of the capturing side device. For example, that the capturing side device is configured to obtain the first data based on the at least one free viewpoint image may specifically include: obtaining depth information of the target scene based on the at least one free viewpoint image; identifying a target object in the target scene based on the at least one free viewpoint image, and determining a feature identifier of the target object; determining the location information of the plurality of target objects in the target scene based on the depth information of the target scene; generating the radar map based on the feature identifier of the target object and the location information of the plurality of target objects; and obtaining the first data based on encoded data that is obtained through encoding based on the at least one free viewpoint image and that is used to display the preset layer and encoded data that is obtained through encoding based on the radar map and that is used to display the radar map.

In this implementation, that the display side device is configured to display the first interface based on the first data may specifically include: displaying, on the specified area of the preset layer obtained through decoding, the radar map obtained through decoding.

In another possible implementation, a target image may be further generated based on the radar map and the preset layer on a side of the capturing side device. For example, in addition to generating the radar map, the capturing side device may be further configured to: generate the target image based on the radar map and a preset image; and then encode the target image to obtain encoded data used to display the radar map (namely, the first data). In this implementation, that the display side device is configured to display the first interface based on the first data may specifically include: directly displaying the target image obtained by decoding based on the first data.

In still another possible implementation, the capturing side device and the display side device may alternatively jointly generate the radar map; and that the capturing side device is configured to obtain the first data based on the at least one free viewpoint image may further specifically include: obtaining depth information of the target scene based on the at least one free viewpoint image; determining the location information of the plurality of target objects in the target scene based on the depth information of the target scene; and obtaining the first data based on the location information of the plurality of target objects and encoded data that is obtained through encoding based on the at least one free viewpoint image and that is used to display the preset layer.

In this implementation, that the display side device is configured to display the first interface based on the first data may specifically include: generating the radar map based on the location information of the plurality of target objects; and displaying the generated radar map in the specified area of the preset layer obtained through decoding.

It may be understood that, in another possible implementation, the capturing side device may alternatively directly encode a plurality of captured free viewpoint images to obtain the first data, and then the display side device performs processing such as generating the radar map based on a plurality of decoded free viewpoint images.

In a possible design, before obtaining the first data, the capturing side device is further configured to obtain, from a preset database, the personalized information corresponding to the at least one specified target object; and that the capturing side device is configured to obtain the first data may further specifically include: obtaining the first data based on the personalized information corresponding to the at least one specified target object.

Based on the foregoing design, optionally, the first data received by the display side device may further include the personalized information corresponding to the at least one specified target object; and the display side device is further configured to: detect a first user operation on the first interface, where the first user operation indicates to obtain personalized information of a first target object, and the first target object is any one of the at least one specified target object; and display a second interface in response to the first user operation, where the second interface includes the personalized information of the first target object.

In another optional example, the display side device may alternatively obtain, from a preset database such as a network, the personalized information corresponding to the at least one specified target object, and associate the personalized information of the at least one specified target object with a corresponding specified target object in the radar map. Based on this, the display side device may also display a second interface in response to a first user operation.

In a possible scenario, if the target scene is a game scene, and the specified target object is an athlete, the personalized information corresponding to the specified target object includes but is not limited to one or a combination of the following information: information about the athlete, game information about the athlete, and game information about a team to which the athlete belongs.

Based on the foregoing designs, that the preset layer is obtained based on the preset viewpoint image of the target scene may include the following several optional manners:
Manner 1: The preset layer is obtained based on a first single viewpoint image, where the first single viewpoint image is any one of a plurality of free viewpoint images captured by the capturing side device.
Manner 2: The preset layer is a multi-viewpoint stitched picture obtained by stitching based on a plurality of free viewpoint images.
Manner 3: The preset layer is a second single viewpoint image generated based on a plurality of free viewpoint images and a target virtual viewpoint.

In addition, based on a scenario in which the display side device displays the radar map at the preset layer, the display side device is further configured to: detect a second user operation on the first interface, where the second user operation indicates to disable displaying of the radar map or hide displaying of the radar map; and display a third interface in response to the second user operation, where the third interface includes the preset layer.

According to a fourth aspect, this application provides a display side device. The display side device includes a plurality of functional modules. The plurality of functional modules interact with each other to implement the method performed by the display side device in the first aspect and implementations of the first aspect, or implement the method performed by the display side device in the third aspect and implementations of the third aspect. The plurality of functional modules may be implemented based on software, hardware, or a combination of software and hardware, and the plurality of functional modules may be randomly combined or divided based on specific implementation.

According to a fifth aspect, this application provides a display side device, including a non-volatile memory and a processor that are coupled to each other. The processor invokes program code stored in the memory, to perform the method performed by the display side device in the first aspect and implementations of the first aspect, or perform the method performed by the display side device in the third aspect and implementations of the third aspect.

According to a sixth aspect, this application provides a capturing side device. The capturing side device includes a plurality of functional modules. The plurality of functional modules interact with each other to implement the method performed by the capturing side device in the second aspect and implementations of the second aspect, or implement the method performed by the capturing side device in the third aspect and implementations of the third aspect. The plurality of functional modules may be implemented based on software, hardware, or a combination of software and hardware, and the plurality of functional modules may be randomly combined or divided based on specific implementation.

According to a seventh aspect, this application provides a capturing side device, including a non-volatile memory and a processor that are coupled to each other. The processor invokes program code stored in the memory to perform the method performed by the capturing side device in the second aspect and implementations of the second aspect, or perform the method performed by the capturing side device in the third aspect and implementations of the third aspect.

According to an eighth aspect, an embodiment of this application further provides a display system. The system may include the capturing side device described in the seventh aspect and at least one display side device described in the fifth aspect.

According to a ninth aspect, this application further provides a computer-readable storage medium. The computer-readable storage medium stores a computer program, and when the computer program is executed by a computer, the computer is enabled to perform the method performed by the display side device or the capturing side device in any one of the foregoing aspects and the possible designs of the foregoing aspects.

According to a tenth aspect, this application provides a computer program product. The computer program product includes a computer program (which may also be referred to as code or instructions), and when the computer program is run, a computer is enabled to perform the method performed by the display side device or the capturing side device in any one of the foregoing aspects and the possible designs of the foregoing aspects.

According to an eleventh aspect, an embodiment of this application further provides a graphical user interface on a display side device. The display side device has a display screen, one or more memories, and one or more processors, the one or more processors are configured to execute one or more computer programs stored in the one or more memories, and the graphical user interface includes a graphical user interface displayed when the display side device performs any one of the foregoing aspects and the possible designs of the foregoing aspects. For example, the display side device may display a first interface.

According to a twelfth aspect, this application further provides a chip. The chip is configured to read a computer program stored in a memory, to perform the method performed by the display side device or the capturing side device in any one of the foregoing aspects and the possible designs of the foregoing aspects.

According to a thirteenth aspect, this application further provides a chip system. The chip system includes a processor, configured to support a computer apparatus in implementing the method performed by the display side device or the capturing side device in any one of the foregoing aspects and the possible designs of the foregoing aspects. In a possible design, the chip system further includes a memory, and the memory is configured to store a program and data that are necessary for the computer apparatus. The chip system may include a chip, or may include a chip and another discrete component.

For beneficial effects of any one of the second aspect to the thirteenth aspect and the possible designs of the second aspect to the thirteenth aspect, refer to beneficial effects of the possible designs of the first aspect. Details are not described herein again.

### BRIEF DESCRIPTION OF DRAWINGS

FIG. 1 is an example diagram of a principle of a free viewpoint technology;
FIG. 2 is a diagram of a possible system architecture to which an embodiment of this application is applicable;
FIG. 3 is a diagram of a first interface according to an embodiment of this application;
FIG. 4 is a diagram of an interaction procedure of a display method according to an embodiment of this application;
FIG. 5 is a diagram of a second interface according to an embodiment of this application;
FIG. 6 is a diagram of a structure of a display apparatus according to an embodiment of this application; and
FIG. 7 is a diagram of another structure of a display apparatus according to an embodiment of this application.

### DESCRIPTION OF EMBODIMENTS

The following describes some terms in embodiments of this application, to facilitate understanding of a person skilled in the art.
(1) In embodiments of this application, the term "at least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural. The character "/" generally indicates an "or" relationship between associated objects. "At least one of the following items (pieces)" or a similar expression thereof means any combination of these items, including any combination of singular items (pieces) or plural items (pieces). For example, at least one of a, b, or c may represent a, b, c, a and b, a and c, b and c, or a, b, and c, where any one of a, b, c, a and b, a and c, b and c, or a, b, and c may include a single a, a single b, and a single c, or may include a plurality of a, a plurality of b, and a plurality of c.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, a first priority criterion and a second priority criterion are merely used to distinguish different criteria, and do not indicate different content, priorities, or importance degrees of the two criteria.

In addition, terms "include" and "have" in embodiments of this application, the claims, and the accompanying drawings are not exclusive. For example, a process, a method, a system, a product, or a device including a series of steps or modules/units is not limited to the listed steps or modules, and may further include steps or modules/units that are not listed.

(2) A VAR technology mainly uses a plurality of camera lenses distributed on a sports field to capture every small action of a player on the sports field from a plurality of camera locations and angles. When a disputable penalty occurs on the sports field or a referee needs to acquire a game video, a technician needs to manually perform the foregoing operation and uses a video playback technology to help the referee make a correct penalty decision. A system based on the VAR technology can implement uninterrupted capturing at a capturing frame rate (FPS) of 30 frames per second through precise synchronization control of the plurality of cameras, to ensure synchronization and storage of wonderful images of a live game, and ensure that a user can click a live game video in an interactive mode to watch the game from a 360° free viewpoint.

In an application scenario in which the VAR technology is used, a dedicated VAR team is usually needed. The VAR team may be determined based on a quantity of cameras distributed on the sports field. For example, the VAR team may include one VAR and three VAR assistants (AVAR). In addition, the VAR team usually further needs four replay operators (replay operator, RO) to provide assistance, and the ROs may sift useful information from various angles shot on site. When the VAR technology needs to be used for refereeing, several staff members of the VAR team in a playback control room perform their respective tasks and can complete their respective tasks in the shortest time. The VAR is responsible for deciding a penalty by analyzing video images, and reminding the referee or being reminded by the referee to use a VAR video for analysis. Generally, the RO may be a technician from the Hawk-Eye^{®} company who provides a VAR device or a technician professionally trained by the Hawk-Eye^{®} company. The RO needs to find a playback of the disputable penalty (goal) from images shot by several or even a dozen cameras at different locations in the shortest time, and selects and provides an optimal angle for a VAR referee international federation of association football official, so that the VAR referee records a situation in an operation room, and the RO transmits information to a large screen in a stadium and media commentators on site through a computer. It may be understood that a principle of using the VAR is "interrupting a game to a minimum extent and obtaining a maximum benefit." The VAR corrects clear and obvious errors and missed decisions, instead of trying to improve accuracy of game penalty to 100%. It can be learned that a use scenario of the VAR has a large limitation, and use of the VAR affects an ongoing game process. Therefore, use of the VAR needs to be very cautious. In addition, a VAR system used by a capturing side device may help the referee to analyze a penalty, and is generally not provided to audience.

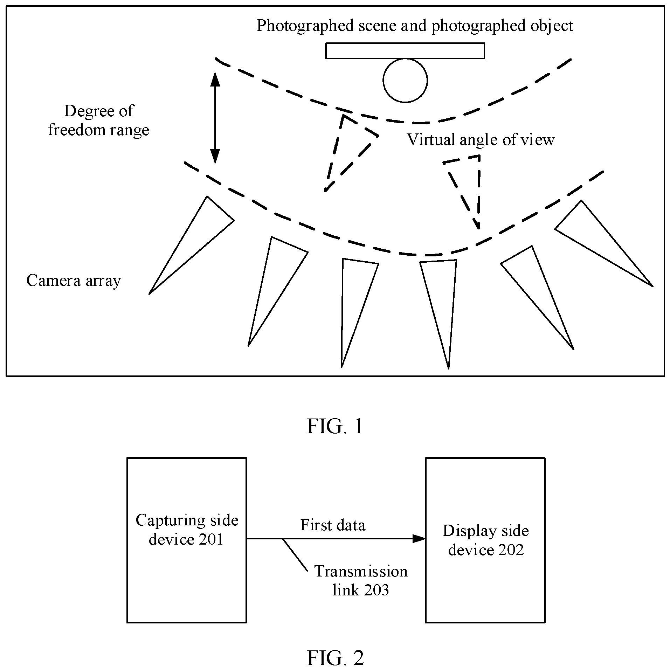

(3) A free viewpoint technology is an imaging technology that emerges in recent years, and is a system that can be used in a live broadcast environment to quickly create dynamic and static "time-freezing" content. This technology provides users with different viewing angles of sports events by performing capturing from a plurality of channels and angles of view in a venue such as a sports game venue or a stage. For example, in a ball game such as a basketball game or a football game, when a basketball is shot or a football is shot, the users may be more willing to watch a key moment at a specific angle. Therefore, the free viewpoint technology provides a novel viewing mode for the users, and may be popular between the users and content operators. For example, FIG. 1 is an example diagram of a principle of the free viewpoint technology. It can be seen from FIG. 1 that a photographed scene and a photographed object may be captured from different angles of view by using a plurality of cameras included in a camera array, so that a viewing requirement of the user for some specific virtual angles of view within a degree of freedom range can be met. A single viewpoint video display system based on the free viewpoint technology cannot independently implement a function of the free viewpoint technology on a display side device, and generally needs to combine a plurality of viewpoints.

In view of this, embodiments of this application provide a display method. The method may be applied to a scenario such as a sports game, for example, a game scenario such as football, rugby, ice hockey, field hockey, polo, or cricket; and may also be applied to a stage performance scenario, for example, a performance scenario such as dancing or singing. In the method, a target object (for example, an athlete, a ball, or a performer) may be identified based on free viewpoint image information captured by a capturing side device; and then, a radar map may be generated based on location information of the target object, and after superimposition processing is performed on the radar map and a preset layer (for example, a layer such as a single viewpoint image, a multi-viewpoint stitched picture, or a generated virtual single viewpoint image), a target image is obtained through drawing and is displayed. Therefore, according to the method, a user can easily obtain global information based on the radar map, so that viewing experience of the user in more scenarios can be met.

In addition, on a display side device, some target objects may be associated with personalized information (for example, information such as locations of an athlete and a ball, a moving direction, and an identity introduction of the athlete), so that the display side device detects and responds to a user operation (for example, a tap operation) of a first target object (for example, any athlete), and may display a first interface used to display the personalized information. Therefore, the method may further provide interaction experience for the user based on the radar map, to enhance a sense of participation, interest, and the like of the user.

It may be understood that the capturing side device in embodiments of this application may be a device such as a camera or an electronic device including a camera. For example, the capturing side device may be a camera in the camera array in FIG. 1, or may be a device cluster including the camera array in FIG. 1.

The display side device in embodiments of this application may be a terminal device having a display function, for example, a large screen, a mobile phone, a tablet computer, a notebook computer, an augmented reality (augmented reality, AR)/virtual reality (virtual reality, VR) device, or a smart home device (for example, a smart television or a smart screen). It may be understood that a specific type of the terminal device is not limited in embodiments of this application.

An example embodiment of a display side device to which embodiments of this application may be applied includes but is not limited to a terminal device running HarmonyOS^{®}, iOS^{®}, Android^{®}, Microsoft^{®}, or another operating system.

FIG. 2 is a diagram of a possible system architecture to which an embodiment of this application is applicable. The system architecture in this embodiment of this application may include a capturing side device 201, a display side device 202, and a transmission link 203.

The capturing side device 201 (which may also be referred to as a "head-end" for short in this embodiment of this application) may be configured to capture a free viewpoint image (or video). The free viewpoint video may be understood as a plurality of free viewpoint image frames. In the following embodiments, one frame of free viewpoint image is used as an example. For a manner of processing the free viewpoint video, refer to a manner of processing the free viewpoint image. Details are not described in the following embodiments.

For example, the capturing side device 201 may be a free viewpoint system including a plurality of cameras. In this example, a captured free viewpoint image may include a plurality of images based on different viewpoints. Different viewpoint images may be images captured by different cameras.

For another example, the capturing side device 201 may alternatively be any camera. In this example, although not shown in FIG. 2, there may be a plurality of capturing side devices 201. For example, capturing side devices 2011 to 201N (N is a positive integer) may be included. In this example, a captured free viewpoint image may be an image obtained by shooting from a viewpoint determined based on a deployment location of the capturing side device 201.

In this embodiment of this application, preprocessing may be performed on a plurality of free viewpoint images captured by the capturing side device 201, to obtain depth information of a target scene. Then, the depth information and the plurality of free viewpoint images may be used to identify at least one type of target object, to obtain location information of target objects. After that, a radar map is obtained based on the location information of the target objects, the radar map is superimposed on a preset layer to obtain a target image, and a first interface including the target image is displayed. It may be understood that a generating process of the radar map may be implemented on the capturing side device 201, or may be implemented on the display side device 202. This is not limited in this application.

In a possible scenario, the capturing side device 201 may generate the radar map, and transmit the radar map to the display side device 202 through the transmission link 203; and the display side device 202 receives the radar map from the capturing side device 201, and displays the first interface obtained by superimposing the radar map on the preset layer.

In another possible scenario, the capturing side device 201 may alternatively directly transmit the plurality of free viewpoint images to the display side device 202 through the transmission link 203; and then, the display side device 202 generates the radar map based on the plurality of free viewpoint images, and displays the first interface obtained by superimposing the radar map on the preset layer.

In still another possible scenario, the capturing side device 201 and the display side device 202 may jointly generate the radar map. Optionally, the capturing side device 201 may perform preprocessing on the plurality of free viewpoint images to obtain the depth information of the target scene, and obtain the location information of the target objects based on the plurality of free viewpoint images and the depth information of the target scene; and then, the capturing side device 201 transmits the obtained plurality of free viewpoint images and the location information of the target objects to the display side device 202 through the transmission link 203.

The display side device 202 (which may also be referred to as a "terminal side" for short in this embodiment of this application) may be configured to: receive the radar map from the capturing side device 201 through the transmission link 203, and then superimpose the radar map on the preset layer for display.

Alternatively, the display side device 202 may be configured to: receive the plurality of free viewpoint images from the capturing side device 201 through the transmission link 203, and perform preprocessing on the plurality of free viewpoint images to obtain the depth information of the target scene; then, identify at least one type of target object based on the depth information of the target scene and the plurality of free viewpoint images, to obtain the location information of the target objects; and finally, after performing superimposition processing based on the location information of the target objects and the preset layer, obtain the radar map through drawing, and display the radar map and the preset layer after superimposing the radar map on the preset layer.

Alternatively, the display side device 202 may be configured to: receive the plurality of free viewpoint images and the location information of the target objects from the capturing side device 201 through the transmission link 203, and after performing superposition processing based on the location information of the target objects and the preset layer, obtain the radar map through drawing, and display the radar map and the preset layer after superimposing the radar map on the preset layer.

The capturing side device 201 may encode to-be-transmitted information into a form of one data packet for transmission, or encode to-be-transmitted information into a form of a plurality of data packets for distribution and transmission. This is not limited in this application. The to-be-transmitted information is data that may be sent by the capturing side device 201 to the display side device 202 and that is described in the foregoing embodiment.

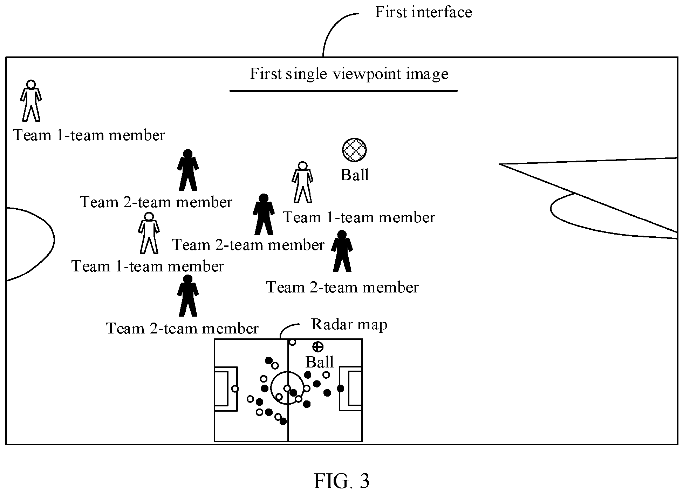

In addition, optionally, the preset layer may be a single viewpoint image, and the single viewpoint image may be a viewpoint image that is of a specified angle and that is determined from a plurality of free viewpoint images in response to selection of a user or selection of a preset rule. For example, FIG. 3 is a diagram of a first interface according to an embodiment of this application. It can be seen from FIG. 3 that the first interface displayed on the display side device 202 may be obtained by superimposing the radar map on a first single viewpoint image. The radar map may be a global radar map obtained based on the location information of the target objects (for example, athletes and a ball in FIG. 3) in the target scene, so that audience can timely determine a game situation. This enhances a sense of participation and interest. The first single viewpoint image may be any one of the plurality of free viewpoint images.

Optionally, the preset layer may alternatively be a multi-viewpoint stitched picture. For example, a display screen of the display side device may display a stitched image of two viewpoint images: left and right viewpoint images, or may display a stitched image of four viewpoint images: upper left, upper right, lower left, and lower right viewpoint images. For another example, the preset layer may alternatively be a second single viewpoint image generated based on a plurality of free viewpoint images and a target virtual viewpoint. It may be understood that the second single viewpoint image is not directly captured by the capturing side device, but is a virtual single viewpoint image generated based on the plurality of viewpoint images captured by the capturing side device. It may be understood that a manner of selecting and obtaining the preset image is not limited in this application.

In this embodiment of this application, the transmission link 203 may be implemented in a plurality of possible manners, for example, a wired manner or a wireless manner. An implementation of the transmission link is not limited in this application.

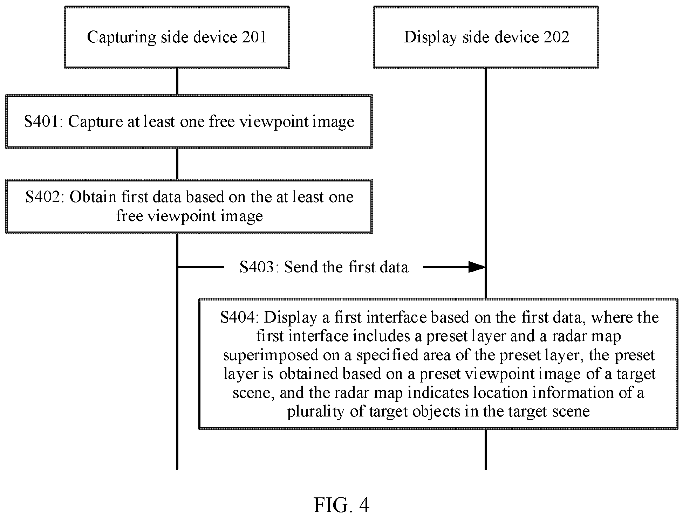

Based on the possible system architecture described in FIG. 2, the following describes the method provided in embodiments of this application with reference to the accompanying drawings. FIG. 4 is a diagram of an interaction procedure of a display method according to an embodiment of this application.

S401: A capturing side device 201 captures at least one free viewpoint image.

For example, in this embodiment of this application, an example in which the capturing side device 201 is a capturing device cluster including a plurality of cameras that are deployed at a plurality of different locations and that are configured to shoot a target scene is used for description. For example, the plurality of cameras may be connected in a wired or wireless manner, so that at least one processor also included in the capturing device cluster may obtain the at least one free viewpoint image separately captured by the plurality of cameras.

The target scene may be, for example, a sports field in a game scene, or a stage venue in a performance scene. In addition, free viewpoint images each are usually an image obtained by shooting a specific area in the target scene from a specific angle of view by using a corresponding camera as a center and a shooting angle determined by an attitude angle of the camera, and is usually a partial picture of the target scene.

S402: The capturing side device 201 obtains first data based on the at least one free viewpoint image.

S403: The capturing side device 201 sends the first data to a display side device 202.

In this embodiment of this application, a main design idea is as follows: A radar map is generated based on the at least one free viewpoint image captured by the capturing side device 201, and the radar map is superimposed on a preset layer such as a single viewpoint image, a multi-viewpoint stitched picture, or a virtual single viewpoint image for display. It may be understood that an intermediate processing process may be implemented by the capturing side device 201, or may be implemented by the display side device 202. During specific implementation, configuration may be performed based on a processing capability of the capturing side device 201 and/or a processing capability of the display side device 202 or an actual scenario. This is not limited in this application. Based on this, the method provided in this application may include but is not limited to the following processing scenarios. It may be understood that, in different processing scenarios, specific content of the first data sent by the capturing side device 201 to the display side device 202 is different. Details are as follows.

Scenario A: The capturing side device 201 generates the radar map. For example, generating of the radar map may include the following procedures.

Step A1: Obtain depth information of the target scene based on the at least one free viewpoint image.

For example, the capturing side device 201 may use the at least one free viewpoint image as an input, and perform depth estimation based on a depth estimation algorithm, a neural network model, and the like, to obtain depth information of each pixel in the free viewpoint image. The depth information of each pixel may also be understood as a distance between the pixel and a shooting source (for example, a corresponding camera).

Step A2: Identify a target object in the target scene based on the at least one free viewpoint image, and determine a feature identifier of the target object.

A game scene is used as an example. The target object may include an athlete. For example, the capturing side device 201 may identify the athlete on a sports field by using a face detection and recognition technology. For another example, the capturing side device 201 may further identify a number on clothes of the athlete by using a text detection and recognition technology. Therefore, the capturing side device 201 may determine an identity of the athlete on the sports field based on a face recognition result and/or a text recognition result. It may be understood that, in this embodiment of this application, the face recognition result and/or the text recognition result may be used as the feature identifier of the target object, so that information about the athlete on the sports field can be determined based on the feature identifier of the target object.

In addition, to improve accuracy of identifying the athlete, before performing identification, the capturing side device 201 may further select, from the at least one free viewpoint image, at least one image frame that meets a preset selection condition. For example, the capturing side device 201 may select the image frame based on a pre-trained neural network model or the like, use the at least one free viewpoint image as an input of the pre-trained neural network model, and may output the at least one image frame that meets the preset selection condition. The preset selection condition may be a good viewpoint (for example, a largest quantity of included target objects or a largest range of a shooting angle of view) and good quality (for example, no obstacle, clear, or not blurred); and the preset selection condition may be obtained through learning by the pre-trained neural network model.

The game scene is used as an example. The target object may further include a ball used in the game. For example, the capturing side device 201 may identify the ball on the sports field by using a target detection and recognition technology. In addition, similar to a scenario in which the target object is an athlete, when the target object is identified as a ball, at least one image frame that meets a preset selection condition may also be selected from the at least one free viewpoint image. Details are not described herein again.

It should be noted that, in this embodiment of this application, different types of target objects may alternatively be identified together. For example, the at least one free viewpoint image may be used as an input of the pre-trained neural network model to output the target objects. The pre-trained neural network model has a capability of identifying different types of target objects.

Step A3: Determine the location information of the plurality of target objects in the target scene based on the depth information of the target scene.

For example, the location information of the target objects may be determined based on the target object identified in step A2 and the depth information that is of the target scene and that is obtained in step A1.

Optionally, in this embodiment of this application, to better determine the location information of the target objects, the location information of the target objects may be further converted into location information identifiers in a camera coordinate system using a specified shooting angle of view (for example, an aerial view angle).

For example, if the target object is an athlete, location information of the athlete on the sports field may be represented by (xᵢ,yᵢ), where i=0, 1, 2, ..., n-1, i is a number of the athlete, and n is a quantity of athletes on the sports field.

For another example, if the target object is a ball, location information of the ball on the sports field may be represented by (x_{ball},y_{ball}).

In addition, the target scene may be a game scene or the like, and usually is a continuous free viewpoint video. In view of this, in this embodiment of this application, a target tracking technology or the like may be further used to track movement tracks of the athlete and the ball; and then, smoothing may be further performed on a change of a location of a single frame of free viewpoint image relative to a location of a previous frame of free viewpoint image, to ensure movement continuity of the target object. In this scenario, location coordinates obtained through smoothing may be used as location information of the target object. For example, if the target object is an athlete, location information of the athlete on the sports field may be represented by (xᵢ',yᵢ'), where i=0, 1, 2, ..., n-1, i is a number of the athlete, and n is a quantity of athletes on the sports field. For another example, if the target object is a ball, location information of the ball on the sports field may be represented by (x_{ball}',y_{ball}').

Step A4: Generate the radar map based on the feature identifier of the target object and the location information of the plurality of target objects.

For example, the capturing side device 201 pre-stores a geometric shape layout used to draw the radar map. The geometric shape layout may be pre-drawn based on a feature of the sports field, for example, a reference line on the sports field is drawn in an equal proportion. For example, a reference line on a sports field in the radar map in FIG. 3 may be pre-drawn and pre-stored. Then, the capturing side device 201 may draw the plurality of target objects in the geometric shape layout based on coordinate information and the location information that is of the plurality of target objects and that is obtained in step A3, and perform rendering, to obtain the radar map shown in FIG. 3.

Based on the content described in Scenario A, in an optional embodiment, the capturing side device 201 may superimpose the radar map obtained in step A4 on the preset layer, to obtain a target image; and then, the capturing side device 201 may compress and encode the target image, and send the target image as the first data to the display side device 202. In this way, a requirement on a processing capability of the display side device 202 can be reduced.

In another optional embodiment, the first data sent by the capturing side device 201 to the display side device 202 may alternatively be encoded data used to display the preset layer and encoded data used to display the radar map. In this way, after receiving the first data, the display side device 202 may separately process the encoded data used to display the preset layer and the encoded data used to display the radar map, so that an optional function of displaying the radar map or skipping displaying the radar map can be provided for the user, thereby improving user experience.

Scenario B: The display side device 202 generates the radar map. In an optional embodiment, the capturing side device 201 may be responsible only for capturing the at least one free viewpoint image. In this case, the first data sent by the capturing side device 201 to the display side device 202 may be compressed encoded data of the at least one free viewpoint image. For an implementation process in which the display side device 202 generates the radar map, refer to description content in Scenario A. Details are not described herein again.

In another optional embodiment, the capturing side device 201 may alternatively perform some preprocessing for generating the radar map. For example, the capturing side device 201 may implement step A1, step A1 and step A2, or step A1 to step A3 described in Scenario A. Then, the capturing side device 201 may transmit, to the display side device 202, encoded data obtained through processing as the first data, where the encoded data is, for example, the depth information of the target scene, an identification result and the feature identifier that are of the target object and the depth information of the target scene, or an identification result and the feature identifier that are of the target object and the location information of the plurality of target objects. The display side device 202 may continue to perform corresponding processing based on specific content of the received first data with reference to the implementation process of generating the radar map in Scenario A. A specific processing process is not described herein again.

S404: The display side device 202 displays a first interface based on the first data, where the first interface includes the preset layer and the radar map superimposed on a specified area of the preset layer, the preset layer is obtained based on a preset viewpoint image of the target scene, and the radar map indicates the location information of the plurality of target objects in the target scene.

In a possible implementation, the preset layer is obtained based on a first single viewpoint image, where the first single viewpoint image is any one of a plurality of free viewpoint images captured by the capturing side device. For example, the first single viewpoint image is a free viewpoint image selected by a user, a free viewpoint image selected by a staff member in the target scene based on an actual situation of the target scene, or a free viewpoint image that is automatically switched based on preset time, a preset condition, or the like.

In another optional implementation, the preset layer is a multi-viewpoint stitched picture obtained by stitching based on a plurality of free viewpoint images. Similar to a manner of determining the first single viewpoint image, the multi-viewpoint stitched picture may be a multi-viewpoint stitched picture selected by a user or set by a staff member in the target scene, or may be a multi-viewpoint stitched picture that is automatically switched based on preset time, a preset condition, or the like. For example, a display screen of the display side device may display a stitched image of two viewpoint images: left and right viewpoint images, or may display a stitched image of four viewpoint images: upper left, upper right, lower left, and lower right viewpoint images. The multi-viewpoint stitched picture may be set by the staff member in the target scene, or may be generated by selecting of a plurality of viewpoints by the user, or the like. This is not limited in this application.

In an optional implementation, the preset layer may alternatively be a second single viewpoint image generated based on a plurality of free viewpoint images and a target virtual viewpoint. For example, the plurality of free viewpoints may be free viewpoint images selected by a user or free viewpoint images selected by a staff member in the target scene based on an actual situation of the target scene, may be free viewpoint images that are automatically switched based on preset time, a preset condition, or the like, or may be all captured free viewpoint images, or the like. In addition, the target virtual viewpoint may alternatively be selected by the user, set by the staff member in the target scene based on an actual situation of the target scene, obtained based on a preset condition, or the like.

It should be noted that the preset layer may alternatively be generated on the capturing side device 201. In this case, the capturing side device 201 may directly include, in the first data, encoded data of the generated preset layer, and send the first data to the display side device 202. Alternatively, for another example, the preset layer may be generated on the display side device 202. In this case, the capturing side device 201 may include, in the first data, encoded data of the at least one captured free viewpoint image, and send the first data to the display side device 202; and then, after receiving the first data, the display side device 202 may obtain the preset layer based on the at least one free viewpoint image included in the first data.

In this embodiment of this application, when superimposing the radar map on the preset layer, the capturing side device 201 or the display side device 202 may perform processing based on a default configuration. As shown in FIG. 3, the radar map may be superimposed on a lower middle area of the preset layer (the first single viewpoint image) by default. In addition, the display side device 202 may further detect a user movement operation used to move the radar map, may change the first interface in response to the user movement operation, and display a display interface obtained after the radar map is moved.

In addition, the display side device 202 may further detect a second user operation on the first interface, where the second user operation indicates to disable displaying of the radar map or hide displaying of the radar map; and display a third interface in response to the second user operation, where the third interface includes the preset layer. For example, the second user operation may include but is not limited to a user voice instruction such as "disabling displaying of the radar map", a user operation of tapping a disabling control such as "×" included in the radar map, or a user operation of dragging the radar map to hide the radar map on a side of the display side device.

In addition, in this embodiment of this application, in a scenario in which the display side device 202 displays the first interface, an extension function of the target object may be further implemented. For example, the display side device 202 may detect a first user operation on the first interface, where the first user operation indicates to obtain personalized information of a first target object, and the first target object is any one of the at least one specified target object; and display a second interface in response to the first user operation, where the second interface includes the personalized information of the first target object. For example, the first user operation may include but is not limited to a tap operation on the first target object on the radar map, a tap operation on the first target object included in the first single viewpoint image, or a user voice instruction such as "displaying personalized information of an athlete 51".

For example, the display side device 202 may obtain personalized information of the at least one target object from the first data sent by the capturing side device 201. For example, the personalized information of the at least one target object may be represented as: infoⱼ, where j=0, 1, 2, ..., m-1, j represents an identifier of the target object, and m represents a quantity of target objects having personalized information. It may be understood that, in this embodiment of this application, some target objects included in the target scene may be associated with personalized information.

Optionally, the display side device 202 or the capturing side device 201 may associate the personalized information of the at least one target object with a corresponding target object, so that the corresponding personalized information can be displayed when a user clicks the corresponding target object, thereby implementing interaction between the user and the display side device 202 and improving a sense of participation and viewing experience of the user.

In another optional example, the display side device 202 may alternatively obtain, from a preset database, the personalized information corresponding to the at least one specified target object, and associate the personalized information of the at least one specified target object with a corresponding specified target object in the radar map.

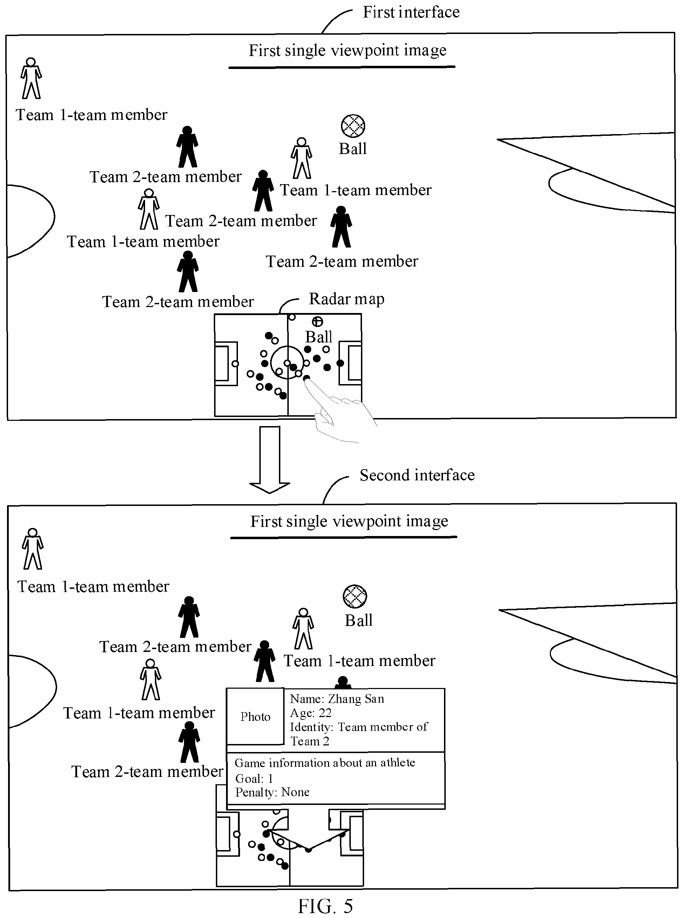

For example, FIG. 5 is a diagram of a second interface according to an embodiment of this application. If the target scene is a game scene, and the specified target object is an athlete, the personalized information corresponding to the specified target object includes but is not limited to one or a combination of the following information: information about the athlete, game information about the athlete, and game information about a team to which the athlete belongs. The display side device 202 detects a tap operation performed on an athlete in the radar map included in the first interface, and may pop up personalized information corresponding to the athlete (that is, display the second interface) in response to the tap operation. For example, the personalized information in FIG. 5 may include information about the athlete such as a photo, a name, an age, and an identity of the athlete, and game information about the athlete such as a goal achievement status and a penalty status. In addition, although not shown in FIG. 5, during actual implementation, other types of personalized information such as game information about a team to which an athlete belongs may be further displayed. This is not limited in this application.

In addition, the display side device 202 may set display duration threshold of the second interface, for example, may set the display duration threshold to 10s. Then, if timing duration for displaying the second interface by the display side device 202 reaches the display duration threshold, the display side device 202 may resume displaying of the first interface, or if the display side device 202 detects and responds to a user operation used to resume displaying of the first interface, the display side device 202 resumes displaying of the first interface. It may be understood that, even if the first interface is resumed to be displayed, specific image frames of the first single viewpoint image and the radar map that are displayed in this case have changed with the target scene. The image frames displayed on the first interface are not limited in this application.

In the method provided in this application, the radar map used to display global information is generated based on a free viewpoint image, the preset layer used to display local information of a viewpoint is obtained based on the free viewpoint image, and the radar map is superimposed on the preset layer and then displayed to a user. In this way, the user can view partial display content of the target scene from the preset layer, and can further obtain global information of the target scene from the radar map. This can improve a sense of participation, and enhance viewing experience and viewing effect of the user.

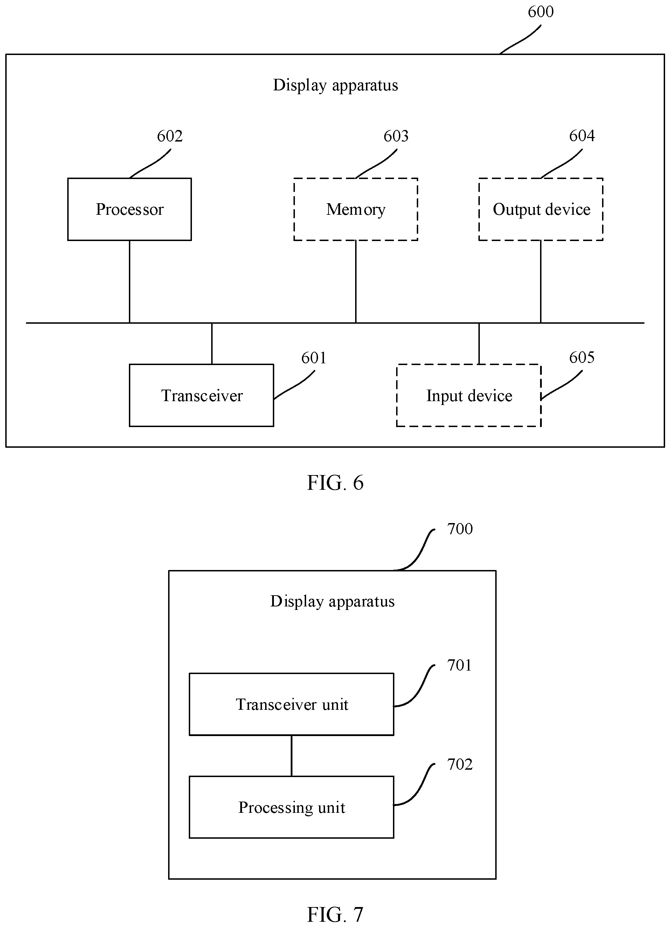

Based on the foregoing embodiments and a same idea, an embodiment of this application further provides a display apparatus, configured to implement a function of the capturing side device or the display side device provided in embodiments of this application. FIG. 6 shows a display apparatus 600 according to an embodiment of this application. The display apparatus 600 may be a display side device, or may be a chip or a chip system in a display side device. Alternatively, the display apparatus 600 may be a capturing side device, or may be a chip or a chip system in a capturing side device.

Specifically, the display apparatus 600 includes a transceiver 601 and at least one processor 602. The processor 602 is coupled to the transceiver 601. Coupling in this embodiment of this application is indirect coupling or a communication connection between apparatuses, units, or modules, may be in an electrical form, a mechanical form, or another form, and is used for information exchange between the apparatuses, the units, or the modules.

Specifically, the transceiver 601 may be a circuit, a bus, a communication interface, or any other module that may be configured to perform information exchange, and may be configured to receive or send information.

Optionally, the display apparatus 600 may further include a memory 603, and the memory 603 is coupled to the transceiver 601 and the processor 602 and is configured to store program instructions.

The processor 602 is configured to invoke the program instructions stored in the memory 603, to enable the display apparatus 600 to perform the method performed by the capturing side device or the display side device in the display method provided in embodiments of this application.

The transceiver 601 is configured to receive/send a radio frequency signal, and is coupled to a receiver and a transmitter that are of the display apparatus 600. The transceiver 601 communicates, via a radio frequency signal, with another display apparatus and a communication network, for example, a wireless local area network (wireless local area network, WLAN), a Bluetooth communication network, or a UWB. During specific implementation, a communication protocol supported by the transceiver 601 includes at least a UWB protocol, and may further include a short-range wireless communication related protocol such as a Bluetooth protocol or a Wi-Fi protocol.

During specific implementation, the memory 603 may include a high-speed random access memory, and may also include a non-volatile memory, for example, one or more magnetic disk storage devices, a flash memory device, or another non-volatile solid-state storage device. The memory 603 may store an operating system (referred to as a system for short below), for example, an embedded operating system such as Android, iOS, Windows, or Linux. The memory 603 may be configured to store an implementation program of this embodiment of this application. The memory 603 may further store a network communication program, and the network communication program may be used to communicate with one or more additional devices, one or more user equipments, and one or more network devices.

The processor 602 may be a general-purpose central processing unit (central processing unit, CPU), a microprocessor, an application-specific integrated circuit (application-specific integrated circuit, ASIC), or one or more integrated circuits configured to control program execution of the solutions of this application.

In some embodiments, the display apparatus 600 may further include an output device 604 and an input device 605. The output device 604 communicates with the processor 602, and may display information in a plurality of manners. For example, the output device 604 may be a liquid crystal display (liquid crystal display, LCD), a light emitting diode (light emitting diode, LED) display device, a cathode ray tube (cathode ray tube, CRT) display device, or a projector (projector). The input device 605 communicates with the processor 602, and may receive input of a user in a plurality of manners. For example, the input device 605 may be a mouse, a keyboard, a touchscreen device, or a sensor device. To facilitate use of the output device 604 and the input device 605 by the user, in some embodiments, the memory 603 may further store a user interface program, and the user interface program may vividly display content of an application program through a graphical operation interface, and receive a control operation performed by the user on the application program through an input control such as a menu, a dialog box, or a key.

It should be noted that FIG. 6 is merely an implementation of this embodiment of this application. In actual application, the display apparatus 600 may further include more or fewer components. This is not limited herein.

In an example, when the display apparatus 600 is used in the display side device in the foregoing embodiments, the transceiver 601 is configured to receive first data from a capturing side device, and the processor 602 is configured to display a first interface based on the first data, where the first interface includes a preset layer and a radar map superimposed on a specified area of the preset layer, the preset layer is obtained based on a preset viewpoint image of a target scene, and the radar map indicates location information of a plurality of target objects in the target scene.

In a possible design, the first data includes encoded data used to display the preset layer and encoded data used to display the radar map; and that the processor 602 is configured to display the first interface based on the first data specifically includes: displaying, on the specified area of the preset layer obtained through decoding, the radar map obtained through decoding.

In another possible design, the first data includes encoded data used to display the preset layer and the location information of the plurality of target objects; and that the processor 602 is configured to display the first interface based on the first data specifically includes: generating the radar map based on the location information of the plurality of target objects; and displaying the generated radar map on the specified area of the preset layer obtained through decoding.

In a possible design, the first data further includes personalized information corresponding to at least one specified target object; the transceiver 601 is further configured to detect a first user operation on the first interface, where the first user operation indicates to obtain personalized information of a first target object, and the first target object is any one of the at least one specified target object; and the processor 602 is further configured to display a second interface in response to the first user operation, where the second interface includes the personalized information of the first target object.

In a possible design, the processor 602 is further configured to: obtain, from a preset database, the personalized information corresponding to the at least one specified target object; and associate the personalized information of the at least one specified target object with a corresponding specified target object in the radar map.

In a possible design, if the target scene is a game scene, and the specified target object is an athlete, the personalized information corresponding to the specified target object includes one or a combination of the following information: information about the athlete, game information about the athlete, and game information about a team to which the athlete belongs.

In a possible design, that the preset layer is obtained based on the preset viewpoint image of the target scene includes the following manners:
Manner 1: The preset layer is obtained based on a first single viewpoint image, where the first single viewpoint image is any one of a plurality of free viewpoint images captured by the capturing side device.
Manner 2: The preset layer is a multi-viewpoint stitched picture obtained by stitching based on a plurality of free viewpoint images.
Manner 3: The preset layer is a second single viewpoint image generated based on a plurality of free viewpoint images and a target virtual viewpoint.

In a possible design, the transceiver 601 is further configured to detect a second user operation on the first interface, where the second user operation indicates to disable displaying of the radar map or hide displaying of the radar map; and the processor 602 is configured to display a third interface in response to the second user operation, where the third interface includes the preset layer.

In another example, when the display apparatus 600 is used in the capturing side device in the foregoing embodiments, the processor 602 is configured to capture at least one free viewpoint image; the processor 602 is configured to obtain first data based on the at least one free viewpoint image; and the transceiver 601 is configured to send the first data to a display side device, where the first data is used by the display side device to display a first interface, the first interface includes a preset layer and a radar map superimposed on a specified area of the preset layer, the preset layer is obtained based on a preset viewpoint image of a target scene, and the radar map indicates location information of a plurality of target objects in the target scene.

In a possible design, that the processor 602 is configured to obtain the first data based on the at least one free viewpoint image specifically includes: obtaining depth information of the target scene based on the at least one free viewpoint image; identifying a target object in the target scene based on the at least one free viewpoint image, and determining a feature identifier of the target object; determining the location information of the plurality of target objects in the target scene based on the depth information of the target scene; generating the radar map based on the feature identifier of the target object and the location information of the plurality of target objects; and obtaining the first data based on encoded data that is obtained through encoding based on the at least one free viewpoint image and that is used to display the preset layer and encoded data that is obtained through encoding based on the radar map and that is used to display the radar map.

In a possible design, that the processor 602 is configured to obtain the first data based on the at least one free viewpoint image specifically includes: obtaining depth information of the target scene based on the at least one free viewpoint image; determining the location information of the plurality of target objects in the target scene based on the depth information of the target scene; and obtaining the first data based on the location information of the plurality of target objects and encoded data that is obtained through encoding based on the at least one free viewpoint image and that is used to display the preset layer.

In a possible design, before obtaining the first data, the transceiver 601 is further configured to obtain, from a preset database, the personalized information corresponding to the at least one specified target object; and that the processor 602 is configured to obtain the first data further includes: obtaining the first data based on the personalized information corresponding to the at least one specified target object.

In a possible design, if the target scene is a game scene, and the specified target object is an athlete, the personalized information corresponding to the specified target object includes but is not limited to one or a combination of the following information: information about the athlete, game information about the athlete, and game information about a team to which the athlete belongs.

In a possible design, that the preset layer is obtained based on the preset viewpoint image of the target scene includes the following manners:
Manner 1: The preset layer is obtained based on a first single viewpoint image, where the first single viewpoint image is any one of a plurality of free viewpoint images captured by the capturing side device.
Manner 2: The preset layer is a multi-viewpoint stitched picture obtained by stitching based on a plurality of free viewpoint images.
Manner 3: The preset layer is a second single viewpoint image generated based on a plurality of free viewpoint images and a target virtual viewpoint.

Based on the foregoing embodiments and a same idea, an embodiment of this application further provides a display apparatus, configured to implement a function of the capturing side device or the display side device provided in embodiments of this application. FIG. 7 shows a display apparatus 700 according to an embodiment of this application. The display apparatus 700 may be a terminal device, or may be a chip or a chip system in a terminal device.

Specifically, the display apparatus 700 includes a transceiver unit 701 and a processing unit 702. The transceiver unit 701 is configured to: receive a signal from another communication apparatus (or another display apparatus) other than the display apparatus 700; and send the signal to the processing unit 702 or send a signal from the processing unit 702 to another communication apparatus (or another display apparatus) other than the display apparatus 700.

When the display apparatus 700 is used in the display side device in the foregoing embodiments, the transceiver unit 701 may cooperate with the processing unit 702 to perform the method performed by the display side device provided in embodiments of this application.

When the display apparatus 700 is used in the capturing side device in the foregoing embodiments, the transceiver unit 701 may cooperate with the processing unit 702 to perform the method performed by the capturing side device provided in embodiments of this application.

Division into the modules in embodiments of this application is an example, is merely division into logical functions, and may be other division during actual implementation. In addition, functional modules in embodiments of this application may be integrated into one processor, each of the modules may exist alone physically, or two or more modules may be integrated into one module. The integrated module may be implemented in a form of hardware, or may be implemented in a form of a software functional module.

Based on the foregoing embodiments and a same idea, an embodiment of this application further provides a display system. The display system includes at least one display side device and the capturing side device provided in the foregoing embodiments.

Based on the foregoing embodiments and a same idea, an embodiment of this application further provides a computer-readable storage medium. The computer-readable storage medium stores a computer-readable program, and when the computer-readable program is run on a computer, the computer is enabled to perform the display method that is applied to the capturing side device or the display side device and that is provided in the foregoing embodiments.

Based on the foregoing embodiments and a same idea, an embodiment of this application further provides a computer program product. When the computer program product is run on a computer, the computer is enabled to perform the display method that is applied to the capturing side device or the display side device and that is provided in the foregoing embodiments.

Based on the foregoing embodiments and a same idea, an embodiment of this application further provides a chip. The chip is configured to read a computer program stored in a memory, to perform the display method that is applied to the capturing side device or the display side device and that is provided in the foregoing embodiments.

Based on the foregoing embodiments and a same idea, an embodiment of this application further provides a chip system. The chip system includes a processor, configured to support a display apparatus in implementing the display method that is applied to the capturing side device or the display side device and that is provided in the foregoing embodiments.

In a possible design, the chip system further includes a memory, and the memory is configured to store a program and data that are necessary for a computer apparatus.

In a possible design, the chip system includes a chip, or includes a chip and another discrete component.

All or some of the methods in embodiments of this application may be implemented by using software, hardware, firmware, or any combination thereof. When the foregoing methods are implemented by using software, all or some of the methods may be implemented in a form of a computer program product. The computer program product includes one or more computer instructions. When the computer program instructions are loaded and executed on a computer, procedures or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

This application is described with reference to the flowcharts and/or the block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A display method, applied to a display side device, and comprising:
receiving first data from a capturing side device; and
displaying a first interface based on the first data, wherein the first interface comprises a preset layer and a radar map superimposed on a specified area of the preset layer, the preset layer is obtained based on a preset viewpoint image of a target scene, and the radar map indicates location information of a plurality of target objects in the target scene.

2. The method according to claim 1, wherein the first data comprises encoded data used to display the preset layer and encoded data used to display the radar map; and
the displaying a first interface based on the first data comprises:
displaying, on the specified area of the preset layer obtained through decoding, the radar map obtained through decoding.

3. The method according to claim 1, wherein the first data comprises encoded data used to display the preset layer and the location information of the plurality of target objects; and
the displaying a first interface based on the first data comprises:
generating the radar map based on the location information of the plurality of target objects; and
displaying the generated radar map on the specified area of the preset layer obtained through decoding.

4. The method according to any one of claims 1 to 3, wherein the first data further comprises personalized information corresponding to at least one specified target object; and
the method further comprises:
detecting a first user operation on the first interface, wherein the first user operation indicates to obtain personalized information of a first target object, and the first target object is any one of the at least one specified target object; and
displaying a second interface in response to the first user operation, wherein the second interface comprises the personalized information of the first target object.

5. The method according to any one of claims 1 to 4, wherein the method further comprises:
obtaining, from a preset database, the personalized information corresponding to the at least one specified target object; and
associating the personalized information of the at least one specified target object with a corresponding specified target object in the radar map.

6. The method according to claim 4 or 5, wherein if the target scene is a game scene, and the specified target object is an athlete, the personalized information corresponding to the specified target object comprises one or a combination of the following information:
information about the athlete, game information about the athlete, and game information about a team to which the athlete belongs.

7. The method according to any one of claims 1 to 6, wherein that the preset layer is obtained based on the preset viewpoint image of the target scene comprises:
the preset layer is obtained based on a first single viewpoint image, wherein the first single viewpoint image is any one of a plurality of free viewpoint images captured by the capturing side device;
the preset layer is a multi-viewpoint stitched picture obtained by stitching based on a plurality of free viewpoint images; or
the preset layer is a second single viewpoint image generated based on a plurality of free viewpoint images and a target virtual viewpoint.

8. The method according to any one of claims 1 to 7, wherein the method further comprises:
detecting a second user operation on the first interface, wherein the second user operation indicates to disable displaying of the radar map or hide displaying of the radar map; and
displaying a third interface in response to the second user operation, wherein the third interface comprises the preset layer.

9. A display method, applied to a capturing side device, and comprising:
capturing at least one free viewpoint image;
obtaining first data based on the at least one free viewpoint image; and
sending the first data to a display side device, wherein the first data is used by the display side device to display a first interface, the first interface comprises a preset layer and a radar map superimposed on a specified area of the preset layer, the preset layer is obtained based on a preset viewpoint image of a target scene, and the radar map indicates location information of a plurality of target objects in the target scene.

10. The method according to claim 9, wherein the obtaining first data based on the at least one free viewpoint image comprises:
obtaining depth information of the target scene based on the at least one free viewpoint image;
identifying a target object in the target scene based on the at least one free viewpoint image, and determining a feature identifier of the target object;
determining the location information of the plurality of target objects in the target scene based on the depth information of the target scene;
generating the radar map based on the feature identifier of the target object and the location information of the plurality of target objects; and
obtaining the first data based on encoded data that is obtained through encoding based on the at least one free viewpoint image and that is used to display the preset layer and encoded data that is obtained through encoding based on the radar map and that is used to display the radar map.

11. The method according to claim 9, wherein the obtaining first data based on the at least one free viewpoint image comprises:
obtaining depth information of the target scene based on the at least one free viewpoint image;
determining the location information of the plurality of target objects in the target scene based on the depth information of the target scene; and
obtaining the first data based on the location information of the plurality of target objects and encoded data that is obtained through encoding based on the at least one free viewpoint image and that is used to display the preset layer.

12. The method according to claim 10 or 11, wherein before the obtaining the first data, the method further comprises:
obtaining, from a preset database, the personalized information corresponding to the at least one specified target object; and
the obtaining the first data further comprises: obtaining the first data based on the personalized information corresponding to the at least one specified target object.

13. The method according to claim 12, wherein if the target scene is a game scene, and the specified target object is an athlete, the personalized information corresponding to the specified target object comprises one or a combination of the following information:
information about the athlete, game information about the athlete, and game information about a team to which the athlete belongs.

14. The method according to any one of claims 9 to 13, wherein that the preset layer is obtained based on the preset viewpoint image of the target scene comprises:
the preset layer is obtained based on a first single viewpoint image, wherein the first single viewpoint image is any one of a plurality of free viewpoint images captured by the capturing side device;
the preset layer is a multi-viewpoint stitched picture obtained by stitching based on a plurality of free viewpoint images; or
the preset layer is a second single viewpoint image generated based on a plurality of free viewpoint images and a target virtual viewpoint.

15. A display side device, comprising a non-volatile memory and a processor that are coupled to each other, wherein the processor invokes program code stored in the memory to perform the method according to any one of claims 1 to 8.

16. A capturing side device, comprising a non-volatile memory and a processor that are coupled to each other, wherein the processor invokes program code stored in the memory to perform the method according to any one of claims 9 to 14.

17. A display system, comprising at least one display side device according to claim 15 and the capturing side device according to claim 16.

18. A computer-readable storage medium, wherein the computer-readable storage medium stores a computer program, and when the computer program runs on a processor, the method according to any one of claims 1 to 8 or claims 9 to 14 is implemented.

19. A computer program product comprising instructions, wherein when the computer program product runs on a computer, the computer is enabled to perform the method according to any one of claims 1 to 8 or claims 9 to 14.
